# EUROPÄISCHE PATENTSCHRIFT

(11) **EP 2 655 897 B1**
(45) Veröffentlichungstag und Bekanntmachung des Hinweises auf die Patenterteilung: **14.11.2018**
(21) Anmeldenummer: 11802056.9
(22) Anmeldetag: 16.12.2011
(51) Int. Cl.: F15B 15/14, F15B 15/28

(54) **ABDECKUNG FÜR EINE ZYLINDER-ANORDNUNG, ZYLINDER-ANORDNUNG UND AUTOMATISCHES GETRIEBE**
COVER FOR A CYLINDER ARRANGEMENT, CYLINDER ARRANGEMENT, AND AUTOMATIC TRANSMISSION
COUVERCLE POUR UN ENSEMBLE CYLINDRE, ENSEMBLE CYLINDRE ET TRANSMISSION AUTOMATIQUE

(30) Priorität: 22.12.2010 DE 102010055694
(43) Veröffentlichungstag der Anmeldung: 30.10.2013
(73) Patentinhaber: KNORR-BREMSE Systeme für Nutzfahrzeuge GmbH, 80809 München (DE)
(72) Erfinder: HUBER, Christian, 80937 München (DE); SEIDL, Tomas, 273 51 Pleteny ujezd (CZ)
(86) Internationale Anmeldenummer: PCT/EP2011/073043
(87) Internationale Veröffentlichungsnummer: WO 2012/084712

(56) Entgegenhaltungen:
- WO-A1-2005/038270
- DE-A1-102006 048 742
- DE-A1-102009 007 657
- US-A- 4 726 282

## Beschreibung

Die vorliegende Erfindung betrifft eine Abdeckung für eine Zylinder-Anordnung gemäß dem Oberbegriff von Anspruch 1, das heißt eine Abdeckung für eine Zylinder-Anordnung mit mindestens einem Zylinder, wobei die Abdeckung dazu geeignet ist, eine Zylinderöffnung des Zylinders abdichtend abzudecken, und wobei mindestens eine Sensoreinheit zum Erfassen einer Messgröße innerhalb des Zylinders zumindest teilweise in die Abdeckung integriert ist, wobei die Sensoreinheit eine Spule aufweist, die in der Abdeckung aufgenommen ist. Die vorliegende Erfindung betrifft weiter eine Zylinder-Anordnung mit einer entsprechenden Abdeckung sowie ein automatisches Getriebe mit einer derartigen Zylinder-Anordnung.

Einer solche Abdeckung ist beispielsweise aus der DE 10 2006 048 742 A1 bekannt.
Zylinder-Anordnungen finden häufig Verwendung im Bereich pneumatischer oder hydraulischer Systeme. Dabei werden Zylinder-Anordnungen insbesondere im Bereich der Kraftfahrzeugtechnologie in sehr großen Stückzahlen produziert. Um die Herstellungskosten niedrig zu halten, ist es daher wünschenswert, Komponenten einer Zylinder-Anordnung derart herzustellen, dass sie besonders einfach und schnell montiert werden können, um Herstellungszeiten und Herstellungskosten insbesondere für große Serien senken. Allerdings treten bei der Herstellung von pneumatischen oder hydraulischen Komponenten Fertigungstoleranzen auf, die bei der Montage berücksichtigt werden müssen.

Aus der DE 10 2005 029 494 B4 ist beispielsweise eine Kolben-Zylinder-Anordnung bekannt, bei der ein Kolbenkopf derart ausgebildet ist, dass ein zusätzliches Geberelement für einen Wegsensor entfallen kann, wodurch ein sonst damit verbundener Montageschritt entfällt.

Der Erfindung liegt die Aufgabe zugrunde, eine leicht montierbare Abdeckung für eine Zylinder-Anordnung bereitzustellen, die es erlaubt, Fertigungstoleranzen auszugleichen. Außerdem soll eine Zylinder-Anordnung mit einer derartigen Abdeckung bereitgestellt werden.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Im Rahmen dieser Beschreibung kann eine Zylinder-Anordnung einen oder mehrere Zylinder aufweisen. Ein Zylinder kann ein Fluid enthalten. Üblicherweise ist ein Zylinder Teil eines hydraulischen oder pneumatischen Systems. Innerhalb eines Zylinders kann ein Kolben aufgenommen sein, der innerhalb des Zylinders bewegbar sein kann, beispielsweise über eine mit ihm verbundene Kolbenstange. Ein Zylinder kann eine Bewandung in der Form von begrenzenden Wänden umfassen und zumindest auf einer Seite eine Zylinderöffnung aufweisen. Zweckmäßigerweise kann die Zylinderöffnung durch eine separat von der Bewandung ausgebildete Abdeckung oder einen Deckel verschlossen werden. Somit kann im Betrieb verhindert werden, dass ein Fluid aus dem Zylinder austritt oder eindringt. Ein Fluid kann eine Flüssigkeit oder ein Gas sein, beispielsweise Pneumatiköl oder Druckluft. Die Abdeckung kann eine Dichtung aufweisen und derart ausgelegt sein, dass im montierten Zustand die Dichtung im Innenbereich des Zylinders angeordnet ist, um von innen an die Bewandung des Zylinders dichtend anzugrenzen. Es ist allerdings auch vorstellbar, dass die Dichtung im Außenbereich des Zylinders vorgesehen ist und die Zylinderöffnung beispielsweise radial umgibt. Es ist zweckmäßig, wenn die Bewandung eines Zylinders im Wesentlichen einstückig ausgebildet ist. Die Abdeckung kann separat von der Bewandung oder dem Zylinder ausgebildet sein. Insbesondere können sich die Herstellungsmaterialien von Zylinder oder Zylinderbewandung und Abdeckung unterscheiden. Beispielsweise kann der Zylinder oder seine Bewandung aus einem metallischen Material hergestellt sein, wie etwa Aluminium. Die Abdeckung kann aus einem Kunststoff, insbesondere einem duroplastischen oder thermoplastischen Kunststoff hergestellt sein. Es kann eine Verdrehsicherung zwischen Abdeckung und Zylinder vorgesehen sein, welche verhindert, dass die Abdeckung sich in einem montierten Zustand und/oder in einem nicht befestigten Zustand gegenüber dem Zylinder verdrehen kann. Innerhalb des Zylinders kann durch die Bewandung ein Innenbereich definiert sein, der auch als Innenraum oder eine Innenseite des Zylinders bezeichnet werden kann. Der Innenbereich kann durch die Zylinderöffnung zugänglich sein oder in einem montierten Zustand durch die Abdeckung begrenzt sein. Ist in diesem Innenraum ein Kolben aufgenommen, kann der Innenbereich bezüglich einer Abdeckung als kolbenseitig bezeichnet werden. Entsprechend kann ein Außenbereich oder eine Außenseite des Zylinders außerhalb des definierten Innenbereichs liegen. Insbesondere kann ein Bereich als außenseitig angesehen werden, der bezüglich der Abdeckung dem Innenbereich oder dem Kolben des Zylinders gegenüberliegt. Es ist zweckmäßig, wenn die Abdeckung oder eine Dichtung der Abdeckung den Innenbereich des Zylinders gegen den Außenbereich abdichtet. Eine Dichtung kann beispielsweise als O-Ring ausgebildet sein. Eine Zylinder-Anordnung beziehungsweise ein Zylinder kann insbesondere für ein pneumatisches oder hydraulisches System eines Fahrzeugs, wie einem Nutzfahrzeug, einem Lastkraftwagen, einem Schienenfahrzeug oder einem Traktor vorgesehen sein. Besonders zweckmäßig ist die Verwendung einer Zylinder-Anordnung für ein automatisches Schaltgetriebe, zum Beispiel zum Schalten des Getriebes vermittels eines Druckmittels wie Druckluft, oder für eine Bremsanlage, insbesondere eine Druckluftbremsanlage. Eine Sensoreinheit kann jede Vorrichtung sein, die dazu geeignet ist, auf eine Messgröße bezogene Signale bereitzustellen. Insbesondere kann eine Sensoreinrichtung eine Spule beziehungsweise einen Hall-Sensor umfassen. Die Messgröße kann beispielsweise eine Wegstrecke sein, die ein Kolben zurücklegt, und/oder eine Kolbenposition. Es ist auch vorstellbar, dass die Messgröße ein innerhalb des Zylinders herrschender Druck ist. Eine Sensoreinheit kann dazu ausgebildet sein, mehr als eine Messgröße zu erfassen. Es ist vorstellbar, dass eine Sensoreinheit einen oder mehr als einen Sensor aufweist. Insbesondere ist es zweckmäßig, wenn die Sensoreinheit dazu vorgesehen ist, den Wert einer Messgröße in einem Innenbereich eines Zylinders zu erfassen. Eine Sensoreinheit kann dazu ausgebildet sein, eine Messgröße direkt oder indirekt zu erfassen. Es kann etwa vorgesehen, dass die Veränderung eines Magnetfeldes erfasst wird, um auf einer Wegstrecke eines Kolbens, an dem ein Magnet befestigt ist, zu schließen. Die Sensoreinheit kann eine Messgröße durch Zusammenwirken mit einem Geberelement erfassen. Das Geberelement kann insbesondere auf einem Kolben beziehungsweise innerhalb eines Innenraums des Zylinders vorgesehen sein. Es ist vorstellbar, dass die Sensoreinheit über eine oder mehrere elektronische Komponenten, die zur Auswertung oder zur Vorauswertung von erfassten Signalen bezüglich einer Messgröße geeignet sind, oder eine entsprechende Sensorelektronik verfügt. Eine Sensoreinheit kann auch an eine externe Elektronik angeschlossen sein, etwa eine Steuereinheit eines Fahrzeugs. In einem montierten Zustand befindet sich die Abdeckung in der für sie zum Abschluss des Zylinders vorgesehenen Position, ist aber nicht notwendigerweise in dieser Position befestigt. In einem nicht montierten Zustand liegen Zylinder und Abdeckung separat vor. Ein Zylinder kann jeden beliebigen Querschnitt aufweisen, insbesondere kann sein Querschnitt rund, rechteckig oder quadratisch sein. Die Abdeckung weist zweckmäßigerweise einen dem Zylinder entsprechenden Querschnitt auf.

Es wird eine Abdeckung für eine Zylinder-Anordnung mit mindestens einem Zylinder vorgeschlagen, wobei die Abdeckung dazu geeignet ist, eine Zylinderöffnung des Zylinders abdichtend abzudecken, und wobei mindestens eine Sensoreinheit zum Erfassen einer Messgröße innerhalb des Zylinders zumindest teilweise in die Abdeckung integriert ist. Die Sensoreinheit weist eine Spule auf. Eine Spule ermöglicht es, Sensorsignale aufgrund von Induktion zu erzeugen, wodurch sich beispielsweise auf einfache Art und Weise Weginformationen bezüglich eines Kolbens erzeugen beziehungsweise erfassen lassen. Die Spule ist in der Abdeckung aufgenommen. Insbesondere kann die Spule ganz oder teilweise in der Abdeckung integriert sein, beispielsweise indem sie in die Abdeckung eingegossen ist. Für ein derartiges Eingießen ist eine Spule besonders geeignet, da sie über keine mechanischen Teile verfügt und einen geringen Wartungsaufwand erzeugt. Weiterhin ist die Spule derart angeordnet, dass sie eine in der Abdeckung vorgesehene Aufnahme zumindest teilweise umgibt und/oder umläuft. Die Aufnahme kann eine der oben beschriebenen Aufnahmen sein, die insbesondere mittig angeordnet sein kann. Beim Anordnen der Spule um die Aufnahme muss gegebenenfalls berücksichtigt werden, dass die Aufnahme über metallische Elemente wie eine Hülse verfügt. Derartige metallische Elemente können einen Einfluss auf von der Spule erfassten Magnetfelder beziehungsweise dadurch induzierten Strom ausüben. Daher muss gegebenenfalls ein geeigneter Abstand zwischen derartigen metallischen Komponenten der Aufnahme und/oder zwischen anderen in der Abdeckung vorhandenen metallischen Komponenten und der Spule vorgesehen sein. Es kann zweckmäßig sein, die Sensoreinheit und/oder eine der Sensoreinheit zugeordnete Sensorelektronik unter Berücksichtigung metallischer Komponenten in der Abdeckung zu kalibrieren.

Die gattungsgemäße Abdeckung wird dadurch weiterentwickelt, dass die Spule derart angeordnet ist, dass sie eine in der Abdeckung vorgesehene Aufnahme zumindest teilweise umgibt und/oder umläuft, wobei die Aufnahme eine Befestigungsvorrichtung aufweist. Eine derartige Aufnahme kann beispielsweise in Form einer Vertiefung in der Abdeckung ausgebildet sein. Insbesondere kann vorgesehen sein, dass eine in einer solchen Vertiefung aufgenommene Hülse zur Aufnahme einer Befestigungsvorrichtung in der Abdeckung vorgesehen ist. So kann beispielsweise eine Hülse für eine Verschraubung vorgesehen sein, die beispielsweise durch gegossenes Material der Abdeckung umgeben ist. Die Aufnahme kann insbesondere mittig oder zentral angeordnet sein, beispielsweise in einem Schwerpunkt oder Mittelpunkt einer Außenfläche der Abdeckung. Es ist vorstellbar, dass nur eine Aufnahme für eine Befestigungsvorrichtung vorgesehen ist. Dadurch, dass eine mittig angeordnete Aufnahme vorgesehen ist, wird bei einer Befestigung durch eine Befestigungsvorrichtung eine gleichmäßige Kraftverteilung auf die Abdeckung erreicht. Die Aufnahme kann außenseitig beziehungsweise auf einer bezüglich der Abdeckung gegenüber der Sensoreinheit angeordneten Seite der Abdeckung vorgesehen sein. Somit lässt sich die Aufnahme leicht erreichen, um die Abdeckung zu montieren oder demontieren. Es ist vorstellbar, dass über die Aufnahme und eine Befestigungsvorrichtung eine bezüglich des Zylinders raumfest angeordnete Vorrichtung, wie etwa eine Gehäuseabdeckung oder ein Gehäuseteil, mit der Abdeckung verbunden oder verbindbar ist, um die Abdeckung im montierten Zustand in der gewünschten Position zu halten. Insbesondere kann die Abdeckung im Zylinder schwimmend gelagert sein, ohne am Zylinder befestigt zu sein. Eine schwimmende Lagerung kann durch eine Dichtung der Abdeckung erreicht werden, die sich an der Bewandung abstützt. Über eine Befestigungsvorrichtung kann sie an einer raumfest zum Zylinder angeordneten Struktur wie beispielsweise einer weiter unten beschriebenen zweiten Abdeckung oder einem Gehäuseteil befestigt oder befestigbar sein. Die Sensoreinheit kann auf geeignete Art an der Abdeckung befestigt beziehungsweise mit dieser verbunden sein. Insbesondere ist eine kraftschlüssige oder formschlüssige Verbindung zwischen Abdeckung und Sensoreinheit vorstellbar. Es ist auch vorstellbar, dass eine Sensorelektronik in die Abdeckung integriert ist. Eine teilweise Integration kann bedeuten, dass ein Teil einer Sensoreinheit, beispielsweise ein Sensorfühler, aus der Abdeckung herausragt oder nicht von der Abdeckung umgeben ist, aber durch die Abdeckung gehalten wird. Die Sensoreinheit kann auch vollständig in der Abdeckung aufgenommen sein, zum Beispiel wenn zum Erfassen der Messgröße kein physischer Kontakt zu einem Medium im Innenraum des Zylinders notwendig ist. Die Abdeckung kann auf geeignete Art am Zylinder oder an einem zum Zylinder raumfest angeordneten Gehäuse oder Gehäuseteil befestigt oder befestigbar sein. Insbesondere ist vorstellbar, dass die Abdeckung eine erste Abdeckung ist, wie sie weiter unten beschrieben ist, die an einer zweiten Abdeckung befestigt ist, beispielsweise einer Gehäuseabdeckung. Durch die Integration der Sensoreinheit in die Abdeckung ist beim Montieren der Zylinder-Anordnung kein zusätzlicher Arbeitsschritt mehr notwendig, in dem die Sensoreinheit an der Abdeckung oder dem Zylinder befestigt werden muss. Somit ist insgesamt die Montage der Zylinder-Anordnung erleichtert. Auch ist leicht sicherzustellen, dass sich die Sensoreinheit an der gewünschten Position befindet.

Es kann vorgesehen sein, dass die Abdeckung zumindest teilweise aus einem gussfähigen Material hergestellt ist. Als gussfähiges Material eignen sich beispielsweise Metalle wie Aluminium, Kunststoffe oder Harze. Insbesondere werden Duroplaste und Thermoplaste als geeignetes Material für die Abdeckung angesehen. Durch ein Gussverfahren lässt sich die Abdeckung besonders einfach in die gewünschte Form bringen.

Bei einer Weiterbildung kann vorgesehen sein, dass die Sensoreinheit zumindest teilweise in die Abdeckung eingegossen ist. Auf diese Art lässt sich die Integration der Sensoreinheit in die Abdeckung bereits beim Formen der Abdeckung erreichen.

Es ist zweckmäßig, dass die Sensoreinheit an eine Verkabelung angeschlossen oder anschließbar ist, die auf einer der Sensoreinheit bezüglich der Abdeckung gegenüberliegenden Seite aus der Abdeckung geführt oder führbar ist. Die Verkabelung kann insbesondere außenseitig aus der Abdeckung geführt sein. Über eine derartige Verkabelung können Signale von der Sensoreinheit nach außen geführt werden. Die Abdeckung kann einen mit der Sensoreinheit verbundenen Stecker zum Anschluss an die Verkabelung aufweisen. Dazu kann der Stecker auf der der Sensoreinheit bezüglich der Abdeckung gegenüberliegenden Seite der Abdeckung angeordnet sein. Der Stecker kann wie oben bezüglich der Sensoreinheit beschrieben zumindest teilweise in die Abdeckung integriert sein. Es ist auch vorstellbar, dass statt einer kabelgebundenen Übertragung eine Funkübertragung erfolgt. Dies kann insbesondere dann zweckmäßig sein, wenn die Abdeckung aus einem nichtleitenden Material hergestellt ist.

Die Abdeckung kann eine innerhalb des Zylinders aufnehmbare oder aufgenommene Dichtung aufweisen, die dazu geeignet ist, den Zylinder abzudichten. Somit kann die Abdichtung einerseits platzsparend im Zylinder untergebracht sein. Andererseits ist es möglich, die Dichtung an der Abdeckung anzubringen, bevor die Abdeckung selbst montiert wird. Auch dadurch lässt sich Montageaufwand reduzieren.

Besonders zweckmäßig ist es, wenn die Aufnahme eine außenseitig des Zylinders vorgesehene Öffnung aufweist. In eine derartige Öffnung kann somit ohne großen Montageaufwand eine Befestigungsvorrichtung eingeführt werden.

Eine Befestigungsvorrichtung kann eine Schraube oder eine Niete aufweisen. Dies ermöglicht eine einfache und zuverlässige Verbindung, insbesondere indem die Schraube oder Niete in einer Aufnahme der Abdeckung aufgenommen ist.

Es kann eine Zylinder-Anordnung mit einer Abdeckung vorgesehen sein, wie sie oben beschrieben ist. Insbesondere kann vorgesehen sein, dass eine derartige Abdeckung in einem Zylinder schwimmend gelagert ist. Dabei kann sie bezüglich des Zylinders durch eine Dichtung in Position gehalten sein. Selbstverständlich ist es auch vorstellbar, dass die Zylinder-Anordnung mehrere Zylinder umfasst, die jeweils mit einer geeigneten Abdeckung versehen sind. Dabei muss nicht jeder Zylinder mit einer oben beschriebenen Abdeckung versehen sein. Insbesondere ist es vorstellbar, dass für einige Zylinder keine Sensoreinheit vorgesehen ist. Mehrere Zylinder können von einer einzelnen, einstückig ausgebildeten Abdeckung abgedeckt sein, die mindestens eine wie oben beschriebene integrierte Sensoreinheit aufweist.

Ferner ist ein automatisches Getriebe für ein Fahrzeug mit einer solchen Zylinder-Anordnung vorgesehen.

Es wird ferner eine Abdeckungseinrichtung für eine Zylinder-Anordnung mit mindestens einem Zylinder vorgeschlagen, wobei die Abdeckungseinrichtung eine erste Abdeckung aufweist, welche zumindest teilweise in den Zylinder aufgenommen oder aufnehmbar ist, um eine Zylinderöffnung des Zylinders abdichtend abzudecken. Die Abdeckungseinrichtung weist eine zweite Abdeckung auf, welche dazu geeignet ist, die erste Abdeckung derart abzudecken, dass ein erstes Spiel zwischen dem Zylinder und der zweiten Abdeckung ausgebildet ist. Ferner weist die Abdeckungseinrichtung eine Befestigungsvorrichtung auf, welche dazu ausgebildet ist, die erste Abdeckung an der zweiten Abdeckung zu befestigen. Die erste Abdeckung kann eine Abdeckung sein, wie sie oben im Zusammenhang mit einer Sensoreinheit beschrieben ist. Die erste Abdeckung kann jedes Merkmal der oben beschriebenen Abdeckung einzeln oder in beliebiger Kombination aufweisen. Somit ist es auch vorstellbar, dass eine erste Abdeckung wie eine der oben beschriebenen Abdeckungen ausgebildet ist, ohne eine integrierte Sensoreinheit aufzuweisen. Das erste Spiel zwischen dem Zylinder und der zweiten Abdeckung kann aufgrund von Toleranzen bei der Produktion gegeben sein. Das erste Spiel kann auf bestimmte Bereiche zwischen der zweiten Abdeckung und dem Zylinder beschränkt sein. Insbesondere ist es vorstellbar, dass die zweite Abdeckung in bestimmten Bereichen direkt an dem Zylinder anliegt, während in anderen Bereichen ein Spiel zwischen Zylinder oder einem Bewandungsrand des Zylinders und der zweiten Abdeckung besteht. Durch die beschriebene Abdeckungseinrichtung lässt sich eine leichte Montage erreichen, bei der Fertigungstoleranzen auf einfache Art ausgeglichen werden. Die zweite Abdeckung kann der ersten Abdeckung eine zusätzliche Stabilität und Versteifung vermitteln, so dass sogar eine verhältnismäßig leichte Abdeckung den in einem pneumatischen oder hydraulischen Zylinder herrschenden Drücken widerstehen kann. Die erste Abdeckung kann bezüglich des Zylinders schwimmend gelagert sein. Insbesondere ist vorstellbar, dass die erste Abdeckung nur über die Befestigungsvorrichtung an der zweiten Abdeckung befestigt ist, nicht aber am Zylinder. Die erste Abdeckung kann wie oben beschrieben aus einem Kunststoffmaterial ausgebildet sein. Die zweite Abdeckung kann aus einem metallischen Material hergestellt sein, etwa Aluminium oder Stahl. Die zweite Abdeckung kann Teil eines Gehäuses oder eine Gehäuseabdeckung sein. Somit kann bei der Montage die erste Abdeckung in den Zylinder eingeführt werden, ohne dass eine umständliche Befestigung am Zylinder notwendig ist. Die zweite Abdeckung kann dazu ausgebildet sein, mehr als einen Zylinder beziehungsweise mehr als eine erste Abdeckung abzudecken. Dabei können unterschiedlich ausgebildete erste Abdeckungen von einer gemeinsamen zweiten Abdeckung abgedeckt sein. Dabei ist es nicht notwendig, dass jede erste Abdeckung eine Sensoreinheit aufweist.

Die erste Abdeckung kann eine erste Aufnahme für die Befestigungsvorrichtung aufweisen. Die erste Aufnahme kann in einem Mittelbereich beziehungsweise mittig in der ersten Abdeckung vorgesehen sein. Die erste Aufnahme kann zur Außenseite des Zylinders gerichtet sein. Somit kann auf einfache Art durch Einführen der Befestigungsvorrichtung in die Aufnahme die erste Abdeckung an der zweiten Abdeckung befestigt werden.

Die Befestigungsvorrichtung kann eine Schraube oder eine Niete umfassen. Eine derartige Befestigungsvorrichtung ermöglicht eine leichte Montage.

Die zweite Abdeckung kann eine zweite Aufnahme für die Befestigungsvorrichtung aufweisen. Somit kann die zweite Abdeckung für eine leichte Montage vorbereitet sein. Es ist vorstellbar, dass eine Befestigungsvorrichtung an der ersten Abdeckung vorgesehen ist. Beispielsweise kann eine vorstehende Struktur, wie etwa eine Schraube ohne Schraubenkopf, außenseitig aus der ersten Abdeckung hervorstehen. Auf die vorstehende Struktur kann die zweite Abdeckung derart aufgesetzt oder aufsetzbar sein, dass die vorstehende Struktur in der Aufnahme der zweiten Abdeckung aufgenommen ist. Unabhängig davon, in welcher Richtung eine Befestigungsvorrichtung in die zweite Aufnahme einführbar ist, kann die zweite Aufnahme eine durch die zweite Abdeckung durchgehende Öffnung aufweisen. Somit lässt sich eine Befestigungsvorrichtung wie eine Schraube oder Niete durch die zweite Abdeckung hindurch führen und entweder in eine erste Aufnahme der ersten Abdeckung einführen oder außenseitig mit der zweiten Abdeckung verbinden oder daran befestigen, beispielsweise durch eine Mutter oder durch Verstemmen einer Niete.

Die erste Aufnahme und/oder die zweite Aufnahme kann eine Hülse umfassen. Eine derartige Hülse kann beispielsweise metallisch sein, um der Aufnahme eine verbesserte Steifigkeit zur Sicherung der Befestigungsvorrichtung zu bieten.

Im montierten Zustand kann die zweite Abdeckung zumindest teilweise über eine die Zylinderöffnung des Zylinders umgebende Zylinderbewandung herausragen.

Insbesondere kann vorgesehen, dass sich die zweite Abdeckung zumindest teilweise an einem Zylinderrand oder einem Rand einer Zylinderbewandung abstützt. Eine zweite Abdeckung kann als teilweise über die Zylinderbewandung herausragend angesehen werden, wenn sie über einen Teil des Umfangs der Zylinderbewandung herausragt. Somit kann die zweite Abdeckung einerseits leicht an einer zum Zylinder raumfest angeordneten Struktur befestigt werden und andererseits zusätzliche Aufgaben erfüllen. Zum Beispiel kann die zweite Abdeckung noch eine Schmutzabdichtung bieten.

Es kann zweckmäßig sein, dass sich im montierten Zustand ein zweites Spiel zwischen der ersten Abdeckung und der zweiten Abdeckung ausbildet, das geringer ist als das erste Spiel. Dadurch kann die zweite Abdeckung besonders gut stabilisierend auf die Abdeckung wirken. Besonders zweckmäßig ist es, wenn das zweite Spiel so nah wie möglich auf Null gebracht wird. Beispielsweise kann die erste Abdeckung so nah wie möglich an der zweiten Abdeckung anliegen. Dies kann beispielsweise durch geeignetes Verschrauben der ersten Abdeckung an die zweite Abdeckung erfolgen.

In diesem Zusammenhang ist eine Zylinder-Anordnung mit einer Abdeckungseinrichtung wie oben beschrieben vorgeschlagen.

Es wird ferner ein Verfahren zum Montieren einer Abdeckungseinrichtung für eine Zylinder-Anordnung beschrieben. Die Abdeckungseinrichtung kann eine der oben beschriebenen Abdeckungseinrichtungen sein. Das Verfahren weist die Schritte auf: Einfügen der ersten Abdeckung in den Zylinder; Abdecken der ersten Abdeckung durch die zweite Abdeckung; und Befestigen der ersten Abdeckung an der zweiten Abdeckung mittels der Befestigungsvorrichtung. Beim Abdecken der ersten Abdeckung durch die zweite Abdeckung kann vorgesehen sein, dass die zweite Abdeckung auf eine aus der ersten Abdeckung herausragende Befestigungsvorrichtung aufgesetzt wird, etwa indem die Befestigungsvorrichtung in oder durch eine zweite Aufnahme der zweiten Abdeckung geführt wird. Die vorstehende Befestigungsvorrichtung kann beispielsweise eine schraubenartige Struktur oder eine nietenartige Struktur. Beim Befestigen kann dann eine Vernietung beziehungsweise beispielsweise eine Verschraubung durch eine Schraubenmutter erfolgen. Es ist auch vorstellbar, dass eine Befestigungsvorrichtung in Richtung auf die erste Abdeckung zu in die zweite Abdeckung eingeführt wird, um in einer ersten Aufnahme der ersten Abdeckung aufgenommen zu werden. Somit kann eine Befestigung der ersten Abdeckung an der zweiten Abdeckung vollständig von außen erfolgen. Beim Einfügen der ersten Abdeckung in den Zylinder kann eine schwimmende Lagerung der ersten Abdeckung im Zylinder vorgesehen sein. Insbesondere ist vorstellbar, dass die erste Abdeckung nicht am Zylinder beziehungsweise innerhalb des Zylinders befestigt wird. Somit wird es möglich, dass beim Befestigen der ersten Abdeckung an der zweiten Abdeckung die erste Abdeckung geeignet ausgerichtet wird. Bevor die erste Abdeckung an der zweiten Abdeckung befestigt wird, kann die zweite Abdeckung an einer raumfest um den Zylinder angeordneten Struktur befestigt werden.

Das Abdecken der ersten Abdeckung durch die zweite Abdeckung kann derart ausgeführt werden, dass zwischen dem Zylinder und der zweiten Abdeckung ein erstes Spiel ausgebildet wird. Für das erste Spiel zwischen der zweiten Abdeckung und dem Zylinder gilt das oben gesagte. Somit können Fertigungstoleranzen ausgeglichen werden, die insbesondere dann auftreten, wenn die zweite Abdeckung nicht am Zylinder befestigt ist, sondern an einer anderen Struktur.

Das Befestigen der ersten Abdeckung an der zweiten Abdeckung kann derart ausgeführt werden, dass sich ein zweites Spiel zwischen der ersten Abdeckung und der zweiten Abdeckung ausbildet, das geringer ist als das erste Spiel. Insbesondere kann das zweite Spiel möglichst gering ausfallen. Somit wird einerseits eine Ausgleichung von Fertigungstoleranzen ermöglicht und die erste Abdeckung durch die zweite Abdeckung gestützt und zusätzlich versteift. Andererseits wird eine gute Abdichtung des Zylinders durch die erste Abdeckung gewährleistet.

Beim Befestigen kann die erste Abdeckung an die zweite Abdeckung herangezogen werden. Das Heranziehen kann insbesondere über die Befestigungsvorrichtung erfolgen, etwa beim Verschrauben der ersten Abdeckung mit der zweiten Abdeckung. Dabei kann vorgesehen sein, dass sich die zweite Abdeckung an einer bezüglich des Zylinders raumfesten Struktur und/oder dem Zylinder abstützt, etwa einem die Öffnung des Zylinders umgebenden Rand der Bewandung. Dabei ist sicherzustellen, dass im Zustand größter Annäherung zwischen erster Abdeckung und zweiter Abdeckung die erste Abdeckung beziehungsweise ihre Dichtung immer noch tief genug in den Zylinder eintaucht, um eine zuverlässige Abdichtung des Zylinders zu bieten.

Die Erfindung wird nun mit Bezug auf die begleitenden Zeichnungen anhand bevorzugter Ausführungsformen beispielhaft erläutert.

Es zeigen:
- Figur 1: eine Zylinder-Anordnung mit einer Abdeckung mit einer Sensoreinheit.
- Figur 2: eine Zylinder-Anordnung mit einer Abdeckungseinrichtung,
- Figur 3: eine Zylinder-Anordnung mit mehreren Zylindern mit einer gemeinsamen Abdeckung.

Im Folgenden bezeichnen gleiche Bezugszeichen im Wesentlichen gleiche oder funktionsgleiche Elemente.

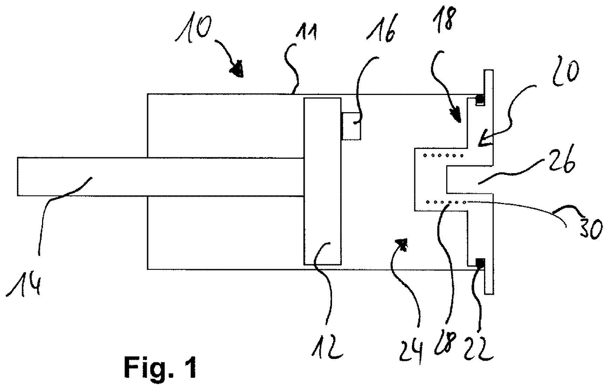

Figur 1 zeigt einen Zylinder 10 einer Zylinder-Anordnung, in welcher ein Kolben 12 aufgenommen ist. Der Kolben 12 ist über eine Kolbenstange 14 innerhalb des Zylinders 10 bewegbar. Am Kolben 12 ist ein Geberelement 16 in Form eines Magneten vorgesehen. Der Kolben 12 kann auf geeigneter Weise gegenüber einer Bewandung 11 des Zylinders 10 abgedichtet sein (nicht gezeigt). Der Querschnitt des Zylinders 10 kann jede geeignete Form aufweisen, beispielsweise kann der Zylinder einen runden, einen quadratischen oder rechteckigen Querschnitt aufweisen. Zweckmäßigerweise weist der Kolben einen entsprechenden Querschnitt auf.

Im Zylinder 10 ist eine Zylinderöffnung 18 vorgesehen. Eine Abdeckung 20 verschließt die Zylinderöffnung. Die Abdeckung 20 ist über eine Dichtung 22 bezüglich des Zylinders 10 abgedichtet. Zusammen mit der Bewandung 11 des Zylinders 10 definiert die Abdeckung 20 einen Innenraum 24 des Zylinders 10. In diesem Innenraum 24 kann sich der Kolben 12 bewegen. Der Innenraum 24 ist durch die Abdeckung 20 und ihre Dichtung 24 gegenüber einer Außenseite des Zylinders 10 abgedichtet. In dem hier gezeigten Beispiel ragt die Abdeckung 20 zumindest teilweise über die Umwandung 11 des Zylinders 10 heraus und stützt sich an der Umwandung 11 in Richtung des Innenraums 24 des Zylinders 10 ab. Es ist allerdings auch vorstellbar, dass die Abdeckung 20 vollständig innerhalb des Zylinders aufgenommen ist. Alternativ oder zusätzlich ist vorstellbar, dass eine radial außerhalb der Umwandung 11 des Zylinders 10 angeordnete Dichtung vorgesehen ist. Die Abdeckung 20 weist ferner eine Aufnahme 26 auf, in welche eine Befestigungsvorrichtung wie eine Schraube oder eine Niete eingeführt werden kann. In der Aufnahme 26 kann eine Hülse aus steifem, insbesondere metallischem Material vorgesehen sein. Die Abdeckung 20 kann aus einem luftdichten beziehungsweise fluiddichten Material bestehen, insbesondere aus einem duroplastischen oder thermoplastischen Kunststoff. In die Abdeckung 20 integriert ist eine Sensoreinheit 28. In diesem Beispiel umfasst die Sensoreinheit 28 eine Spule, die in das Material der Abdeckung 20 eingegossen ist. Die Spule umgibt die Aufnahme 26 zumindest teilweise. Um Signale von der Sensoreinheit 28 nach außen zu führen, ist eine Verkabelung 30 vorgesehen, welche zur Außenseite der Abdeckung 20 geführt ist. Die Spule der Sensoreinheit 20 wirkt mit dem am Kolben 12 vorgesehen Geberelement 16 zusammen, um Signale zu erzeugen, aus welchen die Position beziehungsweise die Bewegung des Kolbens 12 ermittelt werden kann. Über die Dichtung 22 bietet die Abdeckung 20 einen pneumatischen Abschluss des pneumatischen Zylinders 10.

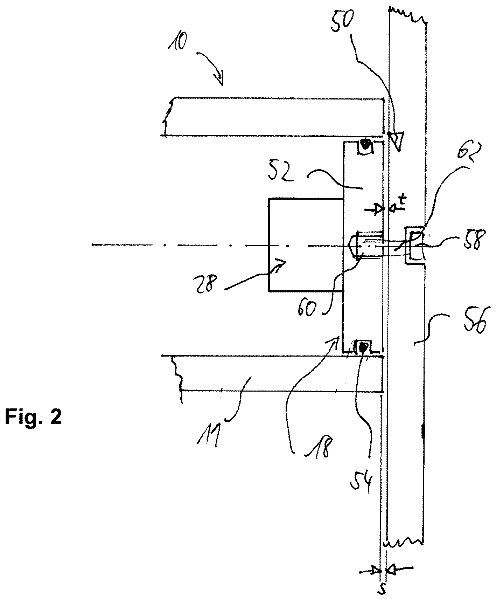

Figur 2 zeigt eine Zylinder-Anordnung mit einem Zylinder 10, der ähnlich wie in Figur 1 gezeigt einen Kolben beziehungsweise eine Kolbenstange aufweisen kann (nicht gezeigt). Der Zylinder 10 weist eine Zylinderöffnung 18 auf. Die Öffnung 18 des Zylinders 10 wird durch eine Abdeckungseinrichtung 50 abgedeckt. Die Abdeckungseinrichtung 50 umfasst eine erste Abdeckung 52, die aus einem duroplastischen oder thermoplastischen Kunststoff hergestellt ist. Die erste Abdeckung 52 ist innerhalb des Zylinders 10 aufgenommen und bezüglich des Zylinders 10 schwimmend gelagert. Die erste Abdeckung 52 weist eine Dichtung 54 auf, die zwischen der ersten Abdeckung und der Bewandung 11 des Zylinders 10 abdichtet und die schwimmende Lagerung bereitstellt. Die erste Abdeckung 52 ist an einer zweiten Abdeckung 56 der Abdeckungseinrichtung 50 über eine Befestigungsvorrichtung 58 befestigt. Die Befestigungsvorrichtung 58 ist dazu in einer ersten Aufnahme 60 der ersten Abdeckung 52 aufgenommen. Die erste Aufnahme 60 kann eine Hülse aufweisen, um eine bessere Befestigung der Befestigungsvorrichtung 58 zu bieten. Die Befestigungsvorrichtung 58 kann eine Schraube oder eine Niete aufweisen. Es ist vorstellbar, dass die erste Abdeckung 52 ähnlich wie die in Figur 1 gezeigte Abdeckung eine integrierte Sensoreinheit 28 aufweist, die hier schematisch dargestellt ist. In diesem Fall kann vorgesehen sein, dass die zweite Abdeckung 56 über eine Aufnahme (nicht gezeigt) verfügt, über die ein Kabel von der Sensoreinheit 28 herausgeführt werden kann. Die zweite Abdeckung 56 weist ferner eine zweite Aufnahme 62 auf, die durch die zweite Abdeckung 56 hindurchgeht, so dass die Befestigungsvorrichtung 58 von außen durch die zweite Abdeckung 56 in die erste Abdeckung 52 hinein durchgeführt werden kann. Die erste Aufnahme 60 ist zweckmäßigerweise nicht vollständig durch die erste Abdeckung 52 hindurchgehend ausgeführt, so dass die Dichtungseigenschaften der ersten Abdeckung 52 nicht beeinträchtigt sind. Zwischen der Bewandung 11 des Zylinders 10 und der zweiten Abdeckung 56 ist ein erstes Spiel s ausgebildet. Dieses Spiel s ist Fertigungstoleranzen geschuldet und lässt sich nicht verringern, da die zweite Abdeckung an einer Struktur außerhalb des Zylinders 10 befestigt ist und in der Regel nicht derart zum Zylinder 10 ausgerichtet werden kann, das das Spiel s verschwindet. Zwischen der ersten Abdeckung 52 und der zweiten Abdeckung 56 ist ein zweites Spiel t ausgebildet, das geringer ist als das Spiel s. Insbesondere kann beim Montieren über die Befestigungsvorrichtung die erste Abdeckung 52 an die zweite Abdeckung 56 herangezogen werden, um das Spiel t so gering wie üblich werden zu lassen oder es auf Null zu verringern. Es ist zu erkennen, dass die zweite Abdeckung 56 über die Bewandung 11 des Zylinders 10 herausragt und sich fortsetzt. Die zweite Abdeckung 56 kann an einem raumfest zum Zylinder 10 angeordneten nicht gezeigten Gehäuseteil oder einer Haltevorrichtung befestigt sein. Es ist vorstellbar, dass die zweite Abdeckung sich dazu fortsetzt, einen oder mehrere weitere Zylinder zu überdecken, um für diese als erste oder zweite Abdeckung oder Gehäuseabdeckung zu dienen.

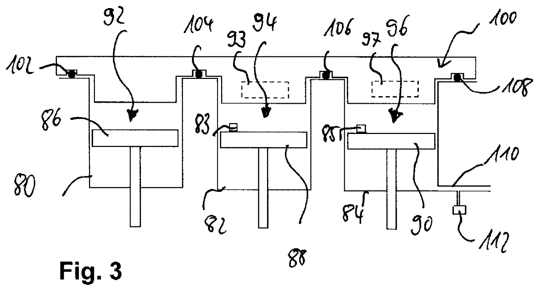

Figur 3 zeigt ein Beispiel für eine Zylinder-Anordnung mit mehreren Zylindern 80, 82 und 84, denen jeweils Kolben 86, 88 und 90 zugeordnet sind. Jeder der Zylinder 80, 82 und 84 weist eine zugeordnete Öffnung 92, 94 beziehungsweise 96 auf. Die Öffnungen 92, 94 und 96 sind durch eine gemeinsame Abdeckungseinrichtung 100 abgedeckt. Ferner weist die Abdeckungseinrichtung 100 in diesem Beispiel Dichtungen 102, 104, 106 und 108 auf, die zylinderaußenseitig radial abdichtend vorgesehen sind. In Figur 3 ist ferner ein dem Zylinder 84 zugeordneter Fluidauslass 110 zu erkennen, an dem beispielsweise eine externe Sensoreinrichtung 112 vorgesehen sein kann. Eine derartige Sensoreinrichtung kann beispielsweise zur Bestimmung eines Drucks innerhalb des Zylinders 84 dienen. An den Kolben 88, 90 der Zylinder 82, 84 ist jeweils ein Geberelement 83, 85 vorgesehen. Jedem Geberelement 83, 85 ist jeweils eine Sensoreinheit 93, 97 zugeordnet, die in der Abdeckung 100 integriert sind. Für den Zylinder 82 ist keine Sensoreinheit vorgesehen, so dass die Abdeckung 100 nur zwei Sensoreinheiten umfasst, die in die Abdeckung 100 integriert sind. Alternativ zur gezeigten einstückigen Abdeckungseinrichtung 100 kann vorgesehen sein, dass einer oder mehr als einer der Zylinder 80, 82, 84 durch eine erste Abdeckung 52 abgedeckt sind, wie sie beispielsweise in Figur 2 beschrieben ist. Eine gemeinsame Abdeckungseinrichtung 100 kann dann beispielsweise bezüglich der jeweiligen einem der Zylinder zugeordneten ersten Abdeckung als zweite Abdeckung dienen, so dass jeweils die erste Abdeckung bezüglich des Zylinders schwimmend aufgenommen ist und nur an der zweiten Abdeckung durch eine geeignete Befestigungsvorrichtung befestigt ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Zylinder
- 11: Zylinderbewandung
- 12: Kolben
- 14: Kolbenstange
- 16: Geberelement
- 18: Zylinderöffnung
- 20: Abdeckung
- 22: Dichtung
- 24: Zylinderinnenraum
- 26: Aufnahme
- 28: Sensoreinheit
- 30: Verkabelung

- 50: Abdeckungseinrichtung
- 52: erste Abdeckung
- 54: Dichtung
- 56: zweite Abdeckung
- 58: Befestigungsvorrichtung
- 60: erste Aufnahme
- 62: zweite Aufnahme

- 80: Zylinder
- 82: Zylinder
- 83: Geberelement
- 84: Zylinder
- 85: Geberelement
- 86: Kolben
- 88: Kolben
- 90: Kolben
- 92: Zylinderöffnung
- 93: Sensoreinheit
- 94: Zylinderöffnung
- 96: Zylinderöffnung
- 97: Sensoreinheit
- 100: Abdeckungseinrichtung
- 102: Dichtung
- 104: Dichtung
- 106: Dichtung
- 108: Dichtung
- 110: Fluidauslass
- 112: externe Sensoreinrichtung

## Patentansprüche

1. Abdeckung (20; 52) für eine Zylinder-Anordnung mit mindestens einem Zylinder (10; 80, 82, 84), wobei die Abdeckung (20; 52) dazu geeignet ist, eine Zylinderöffnung (18) des Zylinders (10; 80, 82, 84) abdichtend abzudecken, und wobei mindestens eine Sensoreinheit (28) zum Erfassen einer Messgröße innerhalb des Zylinders (10; 80, 82, 84) zumindest teilweise in die Abdeckung (20; 52) integriert ist, wobei die Sensoreinheit (28) eine Spule aufweist, die in der Abdeckung (20; 52) aufgenommen ist, wobei die Spule derart angeordnet ist, dass sie eine in der Abdeckung (20; 52) vorgesehene Aufnahme (26; 60) zumindest teilweise umgibt wobei die Aufnahme (26; 60) eine Befestigungsvorrichtung (58) aufweist.

2. Abdeckung nach Anspruch 1, wobei die Abdeckung (20; 52) zumindest teilweise aus einem gussfähigen Material hergestellt ist.

3. Abdeckung nach Anspruch 2, wobei die Sensoreinheit (28) zumindest teilweise in die Abdeckung (20; 52) eingegossen ist.

4. Abdeckung nach einem der vorhergehenden Ansprüche, wobei die Sensoreinheit (28) an eine Verkabelung (30) angeschlossen oder anschließbar ist, die auf einer der Sensoreinheit (28) bezüglich der Abdeckung (20; 52) gegenüberliegenden Seite aus der Abdeckung (20; 52) geführt oder führbar ist.

5. Abdeckung nach einem der vorhergehenden Ansprüche, wobei die Abdeckung (20; 52) eine innerhalb des Zylinders (10; 80, 82, 84) aufnehmbare oder aufgenommene Dichtung (22) aufweist, die dazu geeignet ist, den Zylinder (10; 80, 82, 84) nach außen abzudichten.

6. Abdeckung nach einem der vorhergehenden Ansprüche, wobei die Aufnahme (26; 60) eine zur Außenseite des Zylinders (10; 80, 82, 84) gerichtete Öffnung aufweist.

7. Zylinder-Anordnung mit einer Abdeckung (20; 52) nach einem der Ansprüche 1 bis 6.

8. Automatisches Getriebe für ein Fahrzeug mit einer Zylinder-Anordnung nach Anspruch 7.

## Claims

1. A cover (20;52) for a cylinder arrangement having at least one cylinder (10; 80, 82, 84), the cover (20; 52) being suitable for covering a cylinder opening (18) in the cylinder (10; 82, 82, 84) so as to seal it and at least one sensor unit (28) for capturing a measured value inside the cylinder (10; 82, 82, 84) being at least partially integrated in the cover (20; 52), the sensor unit (28) having a coil which is accommodated in the cover (20; 52), the coil being arranged in such a manner that it at least partially surrounds a recess (26; 60) provided in the cover (20; 52), the recess (26; 60) having a fixing device (58).

2. A cover according to claim 1, the cover (20; 52) being made at least partially from a castable material.

3. A cover according to claim 2, the sensor unit (28) being at least partially cast into the cover (20; 52).

4. A cover according to any of the preceding claims, the sensor unit (28) being connected or connectable to a cable (30) which runs or can run out of the cover (20; 52) on a side opposite the sensor unit (28) in relation to the cover (20; 52).

5. A cover according to any of the preceding claims, the cover (20; 52) having a seal (22) which can be or is accommodated inside the cylinder (10; 80, 82, 84) and is suitable for sealing the cylinder (10; 80, 82, 84) from the outside.

6. A cover according to any of the preceding claims, the recess (26; 60) having an opening facing the outside of the cylinder (10; 80, 82, 84).

7. A cylinder arrangement having a cover (20; 52) according to any of claims 1 to 6.

8. An automatic transmission for a vehicle having a cylinder arrangement according to claim 7.

## Revendications

1. Couvercle (20; 52) pour un agencement de cylindre ayant au moins un cylindre (10; 80, 82, 84), le couvercle (20; 52) étant propre à recouvrir de manière étanche une ouverture (18) du cylindre (10; 80, 82, 84) et dans lequel au moins une unité (28) formant capteur est, pour relever une grandeur de mesure à l'intérieur du cylindre (10; 80, 82, 84), intégrée, au moins en partie, au couvercle (20; 52), l'unité (28) formant capteur ayant une bobine, qui est logée dans le couvercle (20; 52), dans lequel la bobine est disposée de manière à entourer, au moins en partie, un logement (26; 60) prévu dans le couvercle (20; 52), le logement (26; 60) ayant un système (58) de fixation.

2. Couvercle suivant la revendication 1, dans lequel le couvercle (20; 52) est fabriqué, au moins en partie, en un matériau apte à être coulé.

3. Couvercle suivant la revendication 2, dans lequel l'unité (28) formant capteur est incorporée, au moins en partie, par coulée dans le couvercle (20; 52).

4. Couvercle suivant l'une des revendications précédentes, dans lequel l'unité (28) formant capteur est raccordée ou peut être raccordée à un câblage (30), qui est guidé ou peut être guidé d'un côté du couvercle (20; 52) opposé à l'unité (28) formant capteur par rapport au couvercle (20; 52).

5. Couvercle suivant l'une des revendications précédentes, dans lequel le couvercle (20; 52) a une étanchéité (22), qui est reçue ou qui peut être reçue à l'intérieur du cylindre (10; 80, 82, 84) et qui est propre à rendre étanche vis-à-vis de l'extérieur le cylindre (10; 80, 82, 84).

6. Couvercle suivant l'une des revendications précédentes, dans lequel le logement (26; 60) a une ouverture dirigée vers le côté extérieur du cylindre (10; 80, 82, 84).

7. Agencement de cylindre ayant un couvercle (20; 52) suivant l'une des revendications 1 à 6.

8. Boîte de vitesse automatique d'un véhicule comprenant un agencement de cylindre.suivant la revendication 7.
